# EUROPEAN PATENT SPECIFICATION

(11) **EP 2 775 051 B1**
(45) Date of publication and mention of the grant of the patent: **16.01.2019**
(21) Application number: 13157757.9
(22) Date of filing: 05.03.2013
(51) Int. Cl.: B05B 12/08, G01F 11/26, B05B 17/06, B05B 17/00, E03D 9/00

(54) **Spraying device comprising a metering chamber**
Zerstäubervorrichtung mit einer Dosierkammer
Dispositif pulvérisateur avec une chambre de dosage

(43) Date of publication of application: 10.09.2014
(73) Proprietor: Unilever N.V., 3013 AL Rotterdam (NL); Unilever PLC, London, EC4Y 4BQ (GB)
(72) Inventor: Pasquini, Federico, 26841 Casalpusterlengo (IT); Pietrasanta, Davide, 26841, Casalpusterlengo (IT); Thompson, Guy Richard, Seacroft, Leeds, LS14 2AR (GB)
(74) Representative: Corsten, Michael Allan

(56) References cited:
- WO-A1-99/17650
- WO-A1-99/63877
- WO-A1-2007/045738
- WO-A1-2012/114230
- WO-A1-2013/017393
- US-A- 298 091

## Description

### FIELD OF THE INVENTION

The present invention relates to a spraying device for spraying an enclosure with a liquid cleanser. In particular, the invention relates to a spraying device which is suited for automatically cleaning a toilet bowl, more specifically for treatment of micro-organisms and viruses that become airborne in the inner volume of the toilet bowl during flushing. The invention also relates to a cartridge configured to be received by a spraying device. Furthermore the invention relates to a method for spraying an enclosure comprising a rotatable lid with a liquid cleanser.

### BACKGROUND TO THE INVENTION

Water toilets are a wide-spread utility. Although many people use them more than once a day, only few people like cleaning them. However, in view of the importance of domestic and/or public hygiene, toilets need to be cleaned regularly. Apart from the objective need for sanitary hygiene, most users prefer using a clean toilet. Therefore it is highly desirable to provide means that will reduce the effort required to clean a toilet. At the same time it is especially desirable that such means also provide good under-the-rim cleaning, as this a place where dirt, scale and/or microorganisms are often suspected to accumulate.

Moreover, it is well known that every time the toilet is flushed after use, thousands of bacteria and virus particles are catapulted into the air, travelling as far as two meters or more out of and up from the toilet bowl as a fine invisible mist. An existing hypothesis refers to the greatest bacterial mist dispersal occurring not during the initial moments of the flush, but rather once most of the water has already left the bowl.

The bacterial mist can remain airborne for over two hours, floating around in the air and spreading over the room to finally settle on and thus contaminating the available surfaces around the toilet. This spread of faeces-originating bacteria and/or viruses over the bathroom is undesirable with respect to hygiene and could even cause serious health problems. Examples of surfaces on which deposition of pathogenic micro-organisms or viruses is highly undesirable are toothbrushes, hairbrushes, light switches, and the toilet paper.

There is thus a need to reduce or prevent the spread of active airborne micro-organisms and viruses from the toilet after flushing, in particular when pathogenic micro-organisms are involved.

Several attempts have been made to solve the problem of these airborne micro-organisms and viruses.

US5906009 discloses a toilet bowl that has gases and bacteria or virus-laden mist removed directly therefrom by an air evacuation system, both during and after use of the toilet. The disadvantage of such a solution is that it requires a special toilet bowl and a separate and relatively expensive air evacuation system.

A potential solution is to provide a device that can automatically spray an amount of cleanser liquid into a toilet bowl. For instance, WO 2012/156170 describes an automated spraying device for spraying an enclosure, the device having a movable spray head having an outlet orifice through which cleanser can be expelled during operation of a pump. The device also comprises an electrical motor drive mechanism for sequentially operating the pump and the moving spray head.

Alternatively, it may be advantageous to provide a device with a minimum number of moving parts, for instance by using a vibrating mesh spray actuator. This type of actuator functions by bringing a dispensable liquid in contact with a membrane with micron-sized meshes and piezoelectrically driving the membrane at a supersonic frequency. The resulting vibration of the mesh causes the liquid to be expelled in the form of a fine mist.

For example, WO 2011/061478 A1 discloses a device for the treatment of a lavatory appliance which device generates a mist of a treatment composition, the device comprising: a mist generator means comprising a vibrating member and a piezoelectric actuator, a control circuit for operating the mist generator means, a reservoir for the fluid product to be aerosolized, a means for supplying the mist generating means with the fluid product, a housing, and at least one directing nozzle, flow directing implement or flow directing orifice adapted to direct the flow of a mist generated by the mist generating means out from the housing (and towards part of a lavatory appliance). The supplying means can include capillaries, tubes or channels, pumps, a wick, a gravity feed flow, a manual supply means, or an antechamber or cavity which is intermediate the reservoir and the mist generator means.

Similarly, WO 2011/124277 A1 discloses a dispensing device for dispensing a free-flowing composition, in particular a toilet flusher for fastening to the edge of a toilet. The device comprises a reservoir and a piezoelectric dispensing element. The dispensing orifice of the dispensing element is located lower than the bottom of the reservoir and is communicating with it via the duct. The height difference between both ends of the duct ensures that the composition is siphoned to the dispensing element. The dispensing element sprays or atomises the composition in a horizontal direction.

WO 99/17650 discloses a dispensing device attached to the lid of a toilet where the tilting motion of the toilet lid causes the dispensing device to discharge an amount of disinfectant into the toilet bowl.

However, these devices of the prior art present a number of drawbacks. The meshes of vibrating mesh spray actuators are relatively fragile and sensitive. Prolonged contact of such a mesh with a cleaning liquid is likely to damage the mesh, for example because the mesh may be corroded by an aggressive cleaning liquid. Another problem that may be caused by such constant contact of the mesh with a cleanser liquid is that evaporation of its liquid constituents may cause the accumulation of insoluble materials on the mesh, leading to clogging and poor functioning of the mesh. If the liquid exerts a constant hydrostatic pressure on the mesh, the device may start leaking, especially if for instance the atmospheric pressure or the internal air pressure changes. These problems are even more likely to occur when it is desired that the mesh sprays in a downward direction, i.e. by placing the mesh horizontally and feeding the actuator from above. Such downward dispensing is desirable though, to ensure optimal dispensing of a cleaner throughout a toilet bowl.

Vibrating mesh spray actuators are also sensitive to dry running. If the energy supplied by the vibratory movement cannot be dissipated via the dispensable liquid, this will cause undamped mechanical motion of the mesh and/or heating up of the mesh. Therefore, too long periods of dry running will lead to damage, for instance fracturing of the mesh and possibly even melt-down.

Therefore there is a need to provide a spraying device in which the clogging of such a vibrating mesh is reduced or prevented, whilst at the same time run-dry of the mesh needs to be minimised or prevented altogether. Additionally, it is generally desired to reduce the number of moving parts needed for proper functioning of such a spraying device or at least to minimise the increase of the number of moving parts whilst attempting to solve the above problems.

It is therefore an object of the present invention to overcome or ameliorate one or more of the problems of the prior art as presented above. Additionally, it is an object of the present invention to provide a device that is still capable of eliminating within a toilet bowl, the airborne micro-organisms and viruses generated during flushing of the toilet. In addition, it is an object of the current invention to provide a device that prevents the airborne micro-organisms and viruses generated during flushing to spread around the bath room. A further objective of the invention is to provide a device that generates an aerosol of a disinfecting or sanitising fluid. Another objective of the invention is to provide a device that properly sanitizes the toilet after use.

Another object of the invention is to provide a device that reduces the chance that a user of the toilet comes in contact with airborne micro-organisms and viruses and/or disinfecting or sanitising fluid. Another objective of the invention is to provide a device that avoids the user having to reach into the toilet bowl to (re-)place the device. A further objective of the invention is to provide a device that is easy in use.

Another objective of the invention is to provide a device that is small and compact. Another objective of the invention is to provide a device that for environmental and economic reasons only consumes a small amount of a disinfecting or sanitising fluid per use. Another objective of the invention is to provide a device that can be easily re-filled. Another objective of the invention is to provide a device that will work automatically.

Another objective of the invention is to provide a device that will only work when the toilet lid is closed. Another objective of the invention is to provide a device that will only be activated at the most appropriate time.

Yet another objective is to provide a device in which a vibrating mesh spray actuator is enabled to be repeatedly used over prolonged periods of time without malfunctioning or damage. More particularly, it is an object of the invention to provide a device whereby the possibility of clogging and/or dry-running of a vibrating mesh spray actuator is minimised. Finally, it is an objective of the invention to provide a device that will remain active for an effective amount of time.

### SUMMARY OF THE INVENTION

We have now found that a spraying device according to the present invention achieves one or more of the above-mentioned objects. In particular, the spraying device is capable of repeatedly spraying doses of a liquid cleanser into an enclosure without problems such as clogging of the mesh in between two actuation runs whilst at the same time run-dry of the mesh is prevented or at least minimised. To this end, the device comprises a metering system comprising a weir member and a conduit means comprising an element selected from a check valve and a channel (as defined below) which in cooperation with each other and the particular configuration of the features of the spraying device provide the desired effects.

Therefore, according to a first aspect, the present invention provides a spraying device for spraying an enclosure with a liquid cleanser, wherein the device comprises a reservoir **(1)** for containing the liquid cleanser or is adapted for receiving a detachable cartridge **(22)** comprising a reservoir **(1)** for containing the liquid cleanser,
- and wherein the device further comprises
   ∘ a metering system comprising a metering chamber **(3)**, a weir member **(4)**, and a conduit means **(5)**,
   ∘ a spray head **(6)** containing a vibrating mesh spray actuator **(7)**, and
   ∘ an electronic control circuit **(8)** for controlling the spray actuator **(7)**;
- whereby
   ∘ the metering chamber **(3)** comprises an inlet opening **(9)** and an outlet opening **(10)**, and whereby the weir member **(4)** is located between the reservoir **(1)** and the metering chamber **(3)** and
   ∘ the device is rotatable between a first recharging orientation and a second dispensing orientation;
- and whereby in the recharging orientation,
   ∘ the metering chamber **(3)** is located below the reservoir **(1)** and is in fluid communication therewith via the inlet opening **(9)**;
- and whereby in the dispensing orientation:
   ∘ the weir member **(4)** extends upward from the lower wall **(11)** of the reservoir and the metering inlet opening **(9)** is located above the weir member **(4)**,
   ∘ the metering chamber **(3)** is in fluid communication with the vibrating mesh spray actuator **(7)** via the metering outlet opening **(10)** and the conduit means **(5)**, and
   ∘ the spray head **(6)** is located below the metering chamber and is adapted for spraying in downward direction;
- and whereby the conduit means **(5)** comprises an element selected from a check valve **(12)** and a channel **(13)**, whereby
   ∘ if the element is said check valve **(12)**, the check valve **(12)** is closed when the device is in the recharging position and opened when the device is in the dispensing orientation,
   ∘ and if the element is said channel **(13)**, the channel communicates with the metering chamber via a channel inlet opening and communicates with the spray head **(6)** via a channel outlet opening and whereby, when the device is in the recharging orientation, the channel (13) extends in an upward direction from the metering chamber (3) and the spray head **(6)** is located above and away from the metering chamber **(3)**.
Surprisingly, clogging and over-heating of the mesh of the vibrating mesh spray actuator are minimised or even prevented in the spraying device according to the invention. The same effect is obtainable, both when the conduit means is realised in the described configuration comprising a check valve and in the described configuration comprising a channel.

According to a second aspect, the invention also relates to a cartridge (22) comprising a reservoir (1) and a cartridge outlet opening (23), whereby the cartridge is configured to be received by a spraying device according to the invention whereby the spraying device is adapted for detachably receiving the cartridge and whereby the cartridge is receivable in a configuration in which the reservoir (1) communicates with the metering chamber (3) via the cartridge outlet opening (23) and the metering chamber inlet opening (9) when the spraying device is in the recharging orientation. The cartridge according to the invention is interrelated with the spraying device according to the first aspect of the invention, insofar as that is adapted to receive a detachable cartridge.

According to a third aspect, the invention provides a method for spraying an enclosure comprising a rotatable surface with a liquid cleanser, comprising the steps of
a. providing a spraying device according to the invention, whereby the reservoir is charged with cleansing liquid;
b. attaching the spraying device to the rotatable surface;
c. bringing the spraying device in its recharging orientation, thereby filling the metering chamber with a dose of the cleansing liquid;
d. bringing the spraying device in its dispensing orientation;
e. dispensing the dose of cleansing liquid via the vibrating membrane spray actuator; and
f. optionally repeating the steps c to e.

In a fourth aspect, the invention also provides use of a spraying device according to the invention for repeatedly spraying a dose of cleansing liquid into an enclosure, preferably into a toilet bowl.

### BRIEF DESCRIPTION OF FIGURES

**Figure 1** shows a cross section of a schematic representation of a first embodiment of the spraying device of the present invention in the recharging orientation.
**Figure 2** shows a cross section of a schematic representation of the same embodiment as in Figure 1, in the dispensing orientation.
**Figure 3** shows a cross section of a schematic representation of a second embodiment of the spraying device of the present invention in the recharging orientation.
**Figure 4** shows a cross section of a schematic representation of the same embodiment as in Figure 3, in the dispensing orientation.
**Figure 5** shows a cross section of a schematic representation of a third embodiment of the spraying device of the present invention in the recharging orientation.
**Figure 6** shows a cross section of a schematic representation of the same embodiment as in Figure 5, in the dispensing orientation.
**Figure 7** shows a cross section of a schematic representation of a fourth embodiment of the spraying device of the present invention in the recharging orientation.
**Figure 8** shows a cross section of a schematic representation of the same embodiment as in Figure 7, in the dispensing orientation.

### DETAILED DESCRIPTION OF THE INVENTION

For the avoidance of doubt, any feature of one aspect of the present invention may be utilised in any other aspect of the invention. The word "comprising" is intended to mean "including" but not necessarily "consisting of" or "composed of." Thus, the term "comprising" is meant not to be limiting to any subsequently stated elements but rather to optionally also encompass non-specified elements of major or minor functional importance. In other words, the listed steps or options need not be exhaustive. Whenever the words "including" or "having" are used, these terms are meant to be equivalent to "comprising" as defined above. It is noted that the examples given in the description below are intended to clarify the invention and are not intended to limit the invention to those examples per se.

Except in the examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated.

The term sanitising as used in this application refers to a lower level of germ control, killing about 50 to 75% of the germs present on a surface or in the air. For the purposes of this patent, disinfecting can be understood as a higher level of germ control than meant with sanitising (i.e. over 75% germ kill). Under controlled conditions a disinfecting solution provides a 100,000 fold or better reduction in the number of viable micro-organisms (using a specific culture that is treated with the disinfecting solution for an appropriate time period, normally 5 minutes). This is generally known as a '5 log reduction'.

Where, in the context of this description, the term "upward" refers to the orientation of one or more elements of the device or cartridge of the invention, this term is understood as not being limited to an exactly vertical orientation, yet to include orientations with a sufficient upward component as will be clear from the specific context. Thus, for example, a channel extending upwardly may for instance be straight or bended and may also be slanted.

### Spraying device

The present invention relates to a spraying device for spraying an enclosure with a liquid cleanser. Such a spraying device is capable of delivering a liquid in an enclosure, in the form of fine droplets (i.e. a mist or an aerosol). Typically, this delivery is realised by atomising or nebulising the liquid cleanser. The device is capable of metering the cleansing liquid sufficiently accurately, yet with a minimum of moving parts as explained below.

### Enclosure

The spraying device according to the invention can be used in any enclosure. The enclosure may be any enclosed space. Here, the term enclosure is not understood to be limited to hermetically closed spaces as will be evident from this description. Preferably, the device is suitable for dispensing a cleanser in a sanitary enclosure. Examples of sanitary enclosures include a toilet room, a toilet bowl, a bathroom, a shower cabinet, a sauna. Alternatively it is preferred that the enclosure is a domestic appliance comprising a cleanable internal space, including a washing machine, a mechanical dish washer, and the like. It is particularly preferred that the enclosure is a toilet bowl.

The inner volume of the toilet bowl is defined by the space enclosed by the toilet bowl, the water in the bowl, and the toilet lid when the lid is in the closed (lowered) position. Thus, this volume also includes the space under the rim of the toilet, if such a rim is present. The bottom-side of the toilet lid is the side of the lid that faces the inner side of the toilet bowl when it is in its closed (lowered) position.

Since the device is preferably operated by repeatedly bringing it into the recharging and dispensing orientations, respectively, (as described below) it is very desirable that the device is attachable to a rotatable surface. Therefore, the enclosure is preferably equipped with a rotatable lid, whereby the lid typically is a hinged lid or otherwise rotatable around an axis parallel to primary plane of the lid. Since the enclosure preferably is a toilet bowl, the rotatable surface preferably is a toilet lid.

The spraying device of the invention preferably contains means for attaching it to the bottom side of the lid of a toilet. Said means cover any aid, appliance or tool that may be used to secure the device temporarily or permanently to the toilet lid. Non limiting examples of such means are a layer or drop of adhesive, double-sided sticking tape and Velcro. It is however, also possible to use a clamp, a hook, a screw, a bayonet fitting, a vacuum cup or similar means to attach the device to the lid. Another suitable way of attaching is via a mounting base which is permanently attached to the surface and equipping both the base plate and the device with cooperating, clickable, reversible fastening means. The latter configuration enables easy replacement and/or cleaning of the device and or exchange of consumables (if present), including e.g. a reservoir cartridge or batteries. Alternatively, a combination of different securing aids, appliances and/or tools might be used.

### Recharging and dispensing orientation

The spraying device according to the invention is constructed such that it can dispense liquid in one orientation and is recharged by virtue of gravity upon rotating the device to another orientation. For instance, when attached to toilet lid, the device can dispense a dose of cleanser when the lid is closed and is recharged when the lid is opened and closed again.

If the device is intended to be attached to a toilet lid, the dispensing orientation matches the orientation of the device when the lid is in its closed position, whereas the recharging orientation reflects the orientation of the device when the lid is open.

The device functions this way due to the relative placement of its parts in a dispensing orientation and a recharging orientation. In other words, the device is rotatable between a first recharging orientation and a second dispensing orientation.

Thus it will be clear that when the device is in operation, the rotation between the dispensing and recharging orientations will be rotation in a plane of rotation which is inclined with respect to a horizontal plane of reference. Thus, the plane of rotation preferably is at an angle of at least 60°, more preferably at least 75° and even more preferably between 80° and 90° with respect to a horizontal plane of reference. It is particularly preferred that this plane of rotation is substantially vertical. For example, the plane of rotation of a normally mounted toilet lid around its hinges is such a substantially vertical plane.

The angle of rotation between the dispensing orientation and the recharging orientation of the spraying device preferably is between 30° and 100°, more preferably between 60° and 120° and even more preferably between 80° and 100°.

The recharging orientation and the dispensing orientation are defined to facilitate the description of the cooperation between the features of the spraying device. However, from this description it will be clear to the skilled person that when the device is used, the capability of recharging is not limited to the exact recharging orientation as defined herein. Rather, recharging occurs as a gradual process upon rotation of the device. Similarly, the capability of the device to dispense the liquid is not to be understood to be limited to the dispensing orientation, because the device can be designed such as to permit deviations from the dispensing orientation when dispensing. Preferably, such deviations are small deviations, for instance deviations smaller than 15 degrees, more preferably smaller than 10 degrees.

### Reservoir

The spraying device of the present invention comprises a reservoir for containing the liquid cleanser. Thus, the reservoir can be an integral part of the spraying device. Alternatively, the spraying device is adapted for receiving a detachable cartridge comprising a reservoir for containing the liquid cleanser. Such a cartridge allows replacement of the reservoir, for instance when the reservoir is empty or exchange of the cleanser is desired.

Preferably, the spraying device is constructed such that it is easy for the user to re-load the device with the disinfecting or sanitising cleansing fluid, even when in use the device is attached or attachable to a (toilet) lid. One option of reloading the device is by re-filling the reservoir with the disinfecting or sanitising fluid without having to remove the reservoir from the device and/or lid. A second and third option are enabled by the above detachable cartridge. The second option of reloading the device is by removing the cartridge from the device and/or lid, re-filling the removed reservoir, followed by placing the re-filled reservoir back in the device and/or on the lid. The third option of reloading the device is by replacing the empty cartridge by a loaded cartridge.

In view of ease of use, the spraying device is preferably adapted for receiving a detachable cartridge comprising a reservoir for containing the liquid cleanser.

On the one hand, the spraying device and the cartridge can be provided together, such that the invention relates to a spraying device according to any one of the preceding claims, comprising a detachable cartridge, whereby the reservoir is comprised in the cartridge. This detachable cartridge typically communicates with the metering chamber via an outlet opening adapted to provide a leak-tight seal upon placing the cartridge in the device. Preferably, this cartridge is a cartridge according to the second aspect of the invention as defined hereinabove.

On the other hand, it is particularly advantageous to provide such cartridges separately, such that the consumer can replace the cartridge without the need to replace the device. Therefore the second aspect of the present invention relates to the separate cartridge.

The reservoir has the same function, regardless of whether it is an integral part of the device or incorporated in a cartridge. In either case, the cooperation between the reservoir, the metering system, and the conduit means enable the functionality of the spraying device according to the invention.

The volume of the reservoir may fall within the range of from 5 to 200 ml, preferably from 10 to 150 ml, more preferably from 15 to 100 ml, even more preferably from 30 to 60 ml and most preferably about 50 ml.

### Metering system

The function of the metering system is to ensure that a metered dose of cleansing liquid is provided when the device is operated. That is, this metered dose should be provided by rotating the device to the recharging orientation and then rotating it to its dispensing orientation.

To this end, the metering system comprises a metering chamber, a weir member, and a conduit means. The metering chamber comprises an inlet opening and an outlet opening. The weir member is located between the reservoir and the metering chamber.

The functional cooperation between these features is best described with reference to the recharging and dispensing orientation as described above. In the recharging orientation, the metering chamber is located below the reservoir and is in fluid communication therewith via the inlet opening. Thus, the placement of the weir member and the metering inlet opening ensure that during recharging a certain dose of the cleanser can flow into the metering chamber, by virtue of gravity.

In the dispensing orientation the weir member extends substantially vertically from the lower wall of the reservoir and the metering inlet opening is located above the weir member, the metering chamber is in fluid communication with the vibrating mesh spray actuator via the metering outlet opening and the conduit means, and the spray head is located below the metering chamber.

Therefore, when the device is rotated from the recharging orientation into its dispensing orientation, the metering inlet opening will at some point during the rotation be located above the level of the liquid in the reservoir. In some embodiments, the level of the liquid in the metering chamber may at some orientation during this rotation rise above the lowest point of the metering inlet opening, causing some liquid to flow back into the reservoir.

### Weir member

When the spraying device subsequently is in the dispensing orientation, the weir member separates the liquid in the reservoir from that in the metering chamber. Thus, when the metering chamber is emptied during dispensing of the cleanser, the weir prevents the liquid in the reservoir from entering into the metering chamber as long as the device is in the dispensing orientation. Therefore, the weir member is sealingly attached to the bottom and side walls of the reservoir in such a way that liquid cannot flow around its sides or underneath it when it is in the dispensing orientation.

The weir member may be a simple wall like member extending upwardly from the lower wall of the reservoir, wherein upward and lower are both with respect to the rest of the device/reservoir when the device is in the orientation position. In that case the wall-like member typically does not extend completely to the upper wall of the reservoir, but only up to a certain height. The open space above the weir then forms the metering inlet opening. Alternatively, there may be a wall extending from the lower to the upper wall of the reservoir, whereby the wall comprises the metering inlet opening, for instance in the form of an orifice or a slit. In that case the weir member is formed by the part of the wall between the metering inlet opening and the lower wall of the reservoir.

The weir member is located between the reservoir and the metering chamber. Therefore, the weir member also prevents the liquid (apart from any excesses) in the metering chamber from flowing back into the reservoir when the device is in the dispensing orientation.

Therefore, in yet another realisation of the device according to the invention, in particular when the reservoir is comprised in a detachable cartridge, the weir member is formed by part of the cartridge wall and part of the wall of the metering chamber.

The metering system is preferably configured to contain a dispensable volume of cleanser liquid of between 0.1 and 5 millilitre, more preferably between 0.2 and 2 millilitre, even more preferably between 0.3 and 1 millilitre, and still more preferably between 0.4 and 0.6 millilitre. This dispensable volume is the total volume that can be dispensed once the device is in the dispensing orientation, i.e. all the liquid that is capable of flowing to the mesh of the spray head once the latter is actuated. This volume therefore includes the volume containable in the metering chamber (in the dispensing orientation) and for instance also that the conduit means. In view thereof, it is particularly preferred that the volume of the metering chamber is between 0.1 and 5 millilitre, more preferably between 0.2 and 2 millilitre, even more preferably between 0.3 and 1 millilitre, and still more preferably between 0.4 and 0.6 millilitre.

It is highly preferred that the dispensable volume and the actuation time are mutually adapted as explained below.

### Conduit means

Prolonged contact of the mesh with the cleaning liquid will lead to clogging or deterioration of the mesh. The conduit enables flow of the cleanser from the metering chamber to the spray head when the device is in the dispensing orientation, but also prevents prolonged contact between the fluid and the mesh of the vibrating mesh spray actuator after a dose has been dispensed, regardless of whether the device is left in the dispensing orientation (e.g. corresponding to a closed toilet lid) or rotated back to the recharging orientation (e.g. an open toilet lid). Therefore, the conduit means is situated in the flow path of the cleanser liquid between the metering chamber and the spray head, such that in the dispensing orientation the metering chamber is in fluid communication with the vibrating mesh spray actuator via the metering outlet opening and the conduit means.

The conduit means comprises an element selected from a check valve and a channel. These two alternatives of the conduit means contribute in the same way to the invention, in the sense that they both provide the effect as explained above.

### Conduit means comprising a check valve

Thus, according to a first alternative, the conduit means is realised in a form comprising a check valve. The check valve is a valve that is closed when the device is in the recharging position and opened when the device is in the dispensing orientation. The check valve is open when it is in a state in which liquid is allowed to pass to flow from the metering chamber to the spray head. Check valves are well known to the person skilled in the art. It is preferred that the check valve responds autonomously to changes from the dispensing orientation to the recharging orientation and vice versa. Typically, the check valve comprises a movable member that is capable of closing the flow path. It is preferred that the check valve is a float valve. It is even more preferred that the check valve is an in-line float valve. Such an in-line float valve typically comprises a movable closing element (examples including a sphere, a cylinder or a similarly shaped plug), which is capable of floating on the liquid to be controlled and which is comprised in a float valve housing. Thus, when the device is rotated into the recharging orientation, the metering chamber is filled with the cleansing liquid, and the closing element is pushed upward inside the valve housing, thereby closing the conduit. When the device is thereupon rotated to the dispensing orientation, the valve opens and allows the cleanser liquid to flow to the vibrating mesh spray actuator. For manufacturing reasons, an in-line float valve comprising a float sphere as its movable member (that is: a ball float valve) is preferred in certain embodiments. In other embodiments, especially where a good seal is required in the closed position, a floating moveable member is preferred whereby the cross-sectional area on which the pressure is exerted by the liquid is larger than the cross-sectional area of the opening in the float valve housing that is to be closed.

Alternatively, the float valve can comprise a floating element which operates the actual closing member via a lever, comparable to the type of float valve commonly found in a toilet cistern. In yet another alternative, the movable member (e.g. a ball or a cylinder) closes the flow path by virtue of gravity when the device is in the recharging orientation.

### Conduit means comprising a channel

According to a second alternative, the conduit means is realised in a form comprising a channel. The channel communicates with the metering chamber via a channel inlet opening and communicates with the spray head via a channel outlet opening. The channel is configured such that, when the device is in the recharging orientation, the channel extends in an upward direction from the metering chamber and the spray head is located above and away from the metering chamber.

Thus, it is preferred that when the device is in the recharging orientation the spray head (or at least the outlet opening of the channel) is located high enough to be above the level of the cleanser liquid in the reservoir, so that, even when the reservoir and the channel communicate via the metering chamber, the rising liquid in the channel does not reach the mesh of the spray head.

In the device configuration wherein the conduit comprises such a channel, the total volume of fluid available for dispensing in the dispensing orientation is determined by the sum of the volume of liquid in the metering chamber and that in the channel. The metering chamber typically is fillable by a constant volume of liquid. By contrast, when the device is rotated from the recharging to the dispensing orientation, the amount present in the channel after the weir cuts off the flow of liquid from the reservoir into the metering chamber is likely to depend on the fill level of the reservoir. Therefore, in this configuration, the total dispensable volume will also depend on this fill level. The fill level of the reservoir will normally lower upon repeated use of the device without intermediate refilling of the reservoir and hence the total dispensable amount per actuation will vary. This constitutes a potential problem, because the meshes in typical vibrating mesh spray actuators have a limited tolerance to dry-running. That is, the mesh should not be actuated without being in touch with dispensable liquid for too long.

Therefore, the device according to this alternative is preferably configured such that the largest variation in dispensable volume allowed by the device is smaller than the volume of liquid that is dispensable by the vibrating mesh spray actuator within a time that is smaller than or equal to the maximum safe dry-run time of the vibrating mesh spray actuator. Therefore, it is particularly preferred that the volume of the channel (13) is smaller than the volume of liquid that is dispensable by the vibrating mesh spray actuator (7) within a time that is smaller than or equal to the maximum safe dry-run time of said vibrating mesh spray actuator (7).

The maximum safe dry-run times may vary between different types of vibrating mesh spray actuators. However, for a particular type of vibrating mesh spray actuator this time can easily be determined by the skilled person by straight-forward experimentation.

Under usual operating conditions, when a vibrating mesh spray actuator vibrates to expel a mist of the cleanser liquid, outside air will at the same time enter into the spray head via the mesh. Therefore, in a preferred embodiment, it is preferred that the device also comprises an air passage comprising a passage inlet opening and a passage outlet opening, whereby the passage inlet opening opens into the channel close to the channel outlet opening, and whereby when the device is in the dispensing orientation
- the air passage extends upward from the channel, and
- the passage outlet opening opens into the reservoir above and away from the lowest point of the reservoir.

Such an air passage assists in reducing the accumulation of air in the spray head and/or the channel and prevents such air from hindering the flow of cleanser from the metering chamber via the channel during actuation. The passage is called an air passage to emphasise this function, but it is not limited to allowing air flow, as for instance the cleansing liquid may also be allowed to flow through passage in certain configurations.

### Spray head

The device according to the invention comprises a spray head containing a vibrating mesh spray actuator. Vibrating mesh spray actuators are well-known in the art, are commercially available and are for instance also known under the name vibrating mesh nebuliser, ultrasonic nebuliser, or flexible disc atomiser.

The actuator generates the aerosol by means of a piezoelectric atomiser system. Preferably, this is achieved by combining a piezoelectric drive element with a mesh (i.e. a perforated (flexible) disc, foil or cloth), wherein the mesh is brought into a vibrating motion by the piezo element thereby creating the aerosol. Here, upon actuation, an alternating voltage applied to the piezoelectric actuation element causes it to expand and contract; this expand-and-contract-movement produces axial vibratory movements of the mesh. These reciprocating vibratory movements force the liquid through the orifices of the mesh and eject the aerosol.

By means of a non-limiting example, the vibrating mesh spray actuator may be configured as an aerosol-generating system comprising a piezoelectric ring that is radially expandable and contractible upon actuation thereof. A tubular member is disposed within the centre hole of the piezoelectric ring, and a circular vibratable aperture plate is disposed across the internal lumen of the tubular member. The piezoelectric ring is radially expandable and contractible against the tubular member to cause the aperture plate to vibrate in the axial direction. Upon supply of a liquid to the vibratable aperture plate and upon vibration thereof, an aerosol is produced.

It is preferred that the vibrating mesh comprises perforations (orifices) of between 1 and 50 µm (micrometre), more preferably between 5 and 20 µm. Typically, the vibrating frequency of the piezoelectric drive element is between 20 and 300 kHz. The optimal drive frequency and the optimal orifice size typically depend on other design factors specific to a particular vibrating mesh spray actuator and may be easily determined experimentally.

When the device according to the invention in the dispensing orientation, the spray head is located below the metering chamber and is adapted for spraying in downward direction. This downward direction is not intended to be limited to an exactly vertical direction, since the aerosol will typically leave the mesh in the form of a diverging cone, plume or cloud.

Nebulisers in which a vibrating mesh spray actuator is configured to spray in an upward direction often rely on capillary means such as a wick or other porous member to transport the liquid to be dispensed to the mesh, as is shown for instance in WO 2008/008459. Such a configuration is intended to ensure constant contact of the mesh with the liquid. In contrast, the present device does not require such a wick. Therefore, the spraying device of the present invention preferably does not contain a wick for transporting the cleansing liquid to the immediate vicinity of the mesh of the vibrating mesh spray actuator.

For application in the spraying device of the present invention, it is preferred that the vibrating mesh spray actuator is capable of dispensing the nebulised cleanser at a rate of delivery of from 0.001 to 3.0 g/second, more preferably 0.005 to 2.5 g/second. Most preferable is a delivery rate of 0.0075 to 2.0 g/second.

### Aerosol

For the purpose of this invention an aerosol (or mist) is an airborne cloud of particles. These particles comprise liquid and may also comprise solids. The particles are larger than a molecule but small enough to allow them to remain suspended in the atmosphere for a certain amount of time (e.g. over the length of a toilet flush or long enough to be dispersed over the entire interior of a toilet bowl). The average diameter of the particles preferably falls within the range of from 5 to 200 µm (micrometre). More preferably the average diameter of the particles falls within the range of from 15 to 70 µm as measured using standard particle size measurement apparatus (for example a Malvern Spraytec Dv50 measurement) and sprays at 25°C taking an average of 3 repeat measurements.

The particle size specification used in this invention is the volume median particle diameter (Dv50). This Volume Median Diameter is the diameter of a spherical single droplet, whose volume, when multiplied by the total number of droplets in the spray, is found to equal the total spray volume. The volume median diameter is a well-known measure which indicates that 50% of the total volume is made up of droplets with a diameter larger than the median value and 50% is made up of droplets of smaller diameter. Here, the diameter of a droplet is the diameter of a hypothetical spherical droplet with the same volume as the actual droplet.

The particle size of the aerosol is preferably such that the particles remain afloat long enough to fill the enclosure and, in case the enclosure is a toilet, it is even more preferred that the particle size is such that also an effective amount of the cleansing liquid is delivered under the toilet rim. At the same time, the particle size of the aerosol is preferably not so small that particles floating out of the toilet might cause a health risk due to inhalation by the user.

### Angled spray head

The device can be configured such that when it is in the dispensing orientation, the mesh is substantially horizontally oriented, as this would enable down-ward dispensing of a mist of the cleanser liquid by vibrating the mesh. However, if not the entire volume of metered liquid is dispensed, the interplay of gravity and capillary forces would cause any liquid remaining in the spray head to form a droplet hanging centred under the mesh. Therefore, in a preferred embodiment, the principal plane of the mesh of the vibrating mesh spray actuator is at an angle of between 3 and 20 degrees, more preferably between 5 and 15 degrees with respect to the horizontal plane when the device is in the dispensing orientation. Thus, if there should be any remaining liquid, it will be assisted in flowing to the side and off the mesh. Here, the principal plane is the plane that best coincides with the mesh, for instance if mesh is planar, it simply is the plane of the mesh.

### Electronic control circuit

The dispensing actuation of the vibrating mesh spray actuator is controlled by an electronic control circuit. Such control circuits are well known in the art. The control circuit preferably is configured to drive the piezoelectric element of the actuator at a frequency suitable for atomising the liquid. The circuit preferably drives the piezoelectric element at its resonance frequency for maximum energy efficiency.

During one actuation, the circuit should drive the piezoelectric element so long that the metered amount of liquid is atomised, preferably with the least possible amount of liquid remaining and also preferably without dry-running of the actuator after dispensing the liquid for a time equal to or longer than the maximum safe dry-running time of the actuator.

The optimal drive time may for instance be pre-set during development of the device in a way well known to the person skilled in the art.

Alternatively, the control circuit can also be so equipped so as to detect dry-running of the actuator. Thus, the control circuit should preferably be configured such that during actuation, the circuit drives the piezoelectric element until dry-running is detected. Dry-running may for instance be detected from the difference in resonance frequency between a vibrator system (i.e. the piezoelectric element and the mesh in coupled vibration) in contact with the dispensable liquid and such a vibrator system only in contact with air. Such a preferred configuration is described for instance in WO 2011/091002 and US 2003/0196660.

It is preferred that the spraying device can only be actuated for dispensing the aerosol when the enclosure (e.g. the toilet bowl) when the device is in the dispensing orientation, for instance when the toilet lid is closed. In order to detect whether the device is in the recharging or the dispensing orientation, the electronic control circuit is preferably equipped with a tilt sensor.

Tilt sensors are well known in the art. Non limiting examples of such sensors that may be used to detect the orientation of the lid are, motion sensors, position switches (like a mercury switch, or a simple metal ball that moves from a first (inactive) position to second (active) position upon repositioning of the device and/or the toilet lid), light sensors, sound sensors, pressure sensors and weight sensors.

The tilt sensor can for instance be incorporated in the electronic circuit or it can be connected to the control circuit as a separate unit. Advantageously, the tilt sensor can also serve as a safety feature, by configuring the control circuit to prevent or interrupt dispensing in case the device is rotated out of the dispensing orientation.

Preferably, the control circuit is capable of controlling the delay with which the device starts spraying after the device was brought into the dispensing orientation.

The electronic control circuit is suitable for controlling the spray actuator, but does not have to be limited to that functionality. For example, it can also be capable of actuating a speaker or buzzer, for instance to inform the user that the device is about to be actuated or that the device is running out of cleanser liquid or requires battery replacement.

### Power supply

In order to provide electric power to the control circuit and the actuator, the device can for instance be connectable to an external power source, such as electric mains or an external battery. Preferably, the spraying device is adapted for receiving a removable power source, for example one or more batteries.

### Air inlets

In certain configurations, the spraying device of the present invention can comprise one or more additional air inlets which allow equilibration of the outside and inside air pressure. Such air inlets can for example be vents, check valves or the like permitting gas communication from the outside to the reservoir or alternatively from the outside to the metering chamber. In other configurations, it is preferred that the device is free from such additional air inlets, for example for reasons of constructional simplicity.

As is clear from the above description, the device can be constructed in many different ways while still delivering an effective aerosol. Depending on the chosen system for generating energy, the dimensions of the spray head and the composition of the disinfecting and/or sanitising cleansing fluid, the preferred rate of delivery and the particle size of the aerosol will vary.

### Liquid cleanser

Preferably, the disinfecting or sanitising liquid cleanser used in the device of this invention comprises at least one compound selected from the group comprising biocides, fragrances, essential oils, surfactants, solubilizers or hydrotropes, colorants and odour immobilisers.

In particular, it is preferred that a suitable liquid cleanser composition as disclosed WO 2012/156170 is used, whereby the composition more preferably comprises one or more of the suitable ingredients as disclosed in WO 2012/156170.

### Method and use

According to the second aspect of the invention, there is provided a method of spraying an enclosure comprising a rotatable surface with a liquid cleanser, comprising the steps
a. providing a spraying device according to the invention, whereby the reservoir is charged with cleansing liquid;
b. attaching the spraying device to the rotatable surface;
c. bringing the attached spraying device in its recharging orientation, thereby filling the metering chamber with a dose of the cleansing liquid;
d. bringing the charged spraying device in its dispensing orientation;
e. dispensing the dose of cleansing liquid via the vibrating membrane spray actuator; and
f. optionally repeating the steps c to e.

The rotatable surface preferably is a rotatable lid.

The steps of bringing the spraying device in its recharging and dispensing orientations preferably correspond to opening and closing of the rotatable lid, respectively. It is particularly preferred in this method that the enclosure is a toilet bowl and similarly it is preferred that the lid is a toilet lid.

In step b, the spraying device should be attached to the rotatable surface in such a way that the device is in its dispensing orientation when the lid is closed. Therefore, if the enclosure is a toilet bowl, the spraying device is preferably attached to the bottom side of the lid, that is, the side of the lid that faces the inside of the toilet bowl.

Preferred aspects of the device according to the first aspect of the invention are also preferred with respect to the device as provided in step (a) of method according to the invention.

In this method, (if the rotatable surface is a lid) whenever a user opens the (toilet) lid, the metering chamber is filled with liquid. If the user subsequently closes the (toilet) lid, the device is in the right orientation to dispense the cleanser. The same holds true for likewise rotations if the rotatable surface is a surface different from a lid. In a preferred embodiment the electronic control unit detects the change in orientation by means of the optional tilt sensor as described above and thereupon actuates the vibrating mesh spray actuator, thereby dispensing the metered dose of cleanser. By repeating the steps (c) to (e), multiple actuation cycles are possible. Thus, when the toilet has been used, the user can flush it and close the lid to atomise an amount of cleanser.

Therefore, according to the third aspect of the invention, there is provided use of a spraying device according to the invention for repeatedly spraying a dose of cleansing liquid into an enclosure, preferably into a toilet bowl.

### Suitable operation of the device

After using the toilet, the user closes the lid and subsequently flushes the toilet. Following these actions the spraying device may automatically be activated: as a result, it starts to sequentially dispense the disinfecting and/or sanitising fluid as an aerosol into the inner volume of the toilet bowl. The device may remain active until enough fluid is dispensed to effectively kill more than 50%, preferably more than 75%, more preferably more than 90%, more preferably at least 99%, most preferably more that 99.9% of the airborne micro-organisms and/or viruses that were created during the flush.

Preferably the aerosol is forced to flow away from the spraying device into the toilet bowl in such a way that the aerosol particles may spread evenly over the whole inner volume of the toilet bowl. Preferably, it is avoided to cover one side of the inner volume of the toilet bowl more than its opposite side. An aerosol spray that is biased to cover one side of the inner volume of the toilet bowl more than its opposite side might cause a significant difference in concentration of disinfecting or sanitising aerosol droplets from one part of the bowl volume to the other. This may cause the airborne bacteria and viruses present in the area where there is a low(er) concentration of disinfecting or sanitising aerosol droplets to survive the treatment.

The spraying device may be placed anywhere on the bottom-side of the toilet lid as long as the emitted aerosol particles can cover the inner surface of the toilet bowl without creating a significant difference in concentration of disinfecting or sanitising aerosol droplets from one part of the bowl volume to the other. Preferably the spraying device is placed more or less in the middle of the lid.

In order to cover the whole inner volume of the toilet bowl without creating a significant difference in concentration of disinfecting or sanitising aerosol droplets from one part of the bowl volume to the other, the direction wherein the aerosol is emitted by the spray head is related to the position of the dispensing device on the lid.

The aerosol particles remain suspended in the air for an effective amount of time. This allows them to diffuse from the point of entering the inner volume of the bowl (evenly) in all directions towards the bowl surface including the space under the rim. The aerosol particles may thus eliminate the airborne micro-organisms and/or viruses (evenly) over the whole inner volume of the bowl and may remain effective against airborne micro-organisms and/or viruses all the time they remain suspended in the air. The delivery of the disinfecting and/or sanitising aerosol in combination with the time the created aerosol remain suspended in the air is preferably controlled in such a way that an effective number of aerosol particles remain suspended in the air at least until the end of the flush (i.e. for as long as airborne bacteria and/or viruses may be created) and more preferably even longer.

### DETAILED DESCRIPTION OF THE FIGURES

Further preferred details of the invention will become clear from the non-limiting examples provided by the figures.

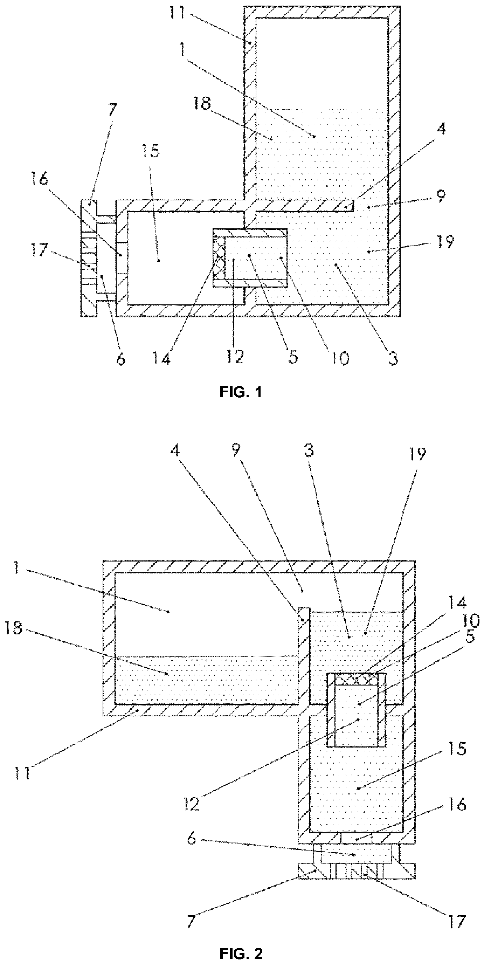

Figure 1 shows a cross section of a schematic representation of a first preferred embodiment of the spraying device of the present invention in the recharging orientation. In typical use, this would correspond to the device being connected to the bottom side of a toilet lid, whereby the lid is opened. The device comprises a reservoir 1, which contains an amount of cleanser liquid. In the recharging orientation, the metering system 2 is located below the reservoir 1 and communicates with the reservoir 1 via the inlet opening 9. Therefore the metering chamber 3 is also filled with liquid.

The metering chamber 3 in turn communicates with the conduit means 5 via the outlet opening 10. In the embodiment of Figure 1, the conduit means 5 comprises a check valve 12. The valve is only shown schematically as a housing comprising a movable closing member 14. The position of the movable closing member 14 as depicted in Figure 1 corresponds to a closed valve, which blocks the flow of fluid from the outlet opening 10 into the intermediate chamber 15. Thus, Figure 1 shows how the metering chamber 3 is filled with liquid in the recharging orientation of the device. At the same time, the check valve 12 being closed ensures that the fluid does not reach the spray head 6. Thus, prolonged contact between the liquid and the vibrating mesh spray actuator 7 is prevented as long as the device is in the recharging orientation.

In typical use conditions, the device of Figure 1 can be brought into the dispensing orientation by closing the toilet lid. The dispensing orientation is shown in Figure 2. Therefore, the features of the device in Figure 1 are also present in Figure 2, albeit in a different orientation. In the orientation of Figure 2, the metering system 2 is now placed adjacent to the reservoir 1. The metering chamber 3 is depicted comprising an amount of cleanser 19, signifying that the cross section represents the device approximately at the onset of the dispensing action. In contrast to the situation of Figure 1, the weir member 4 now separates the cleanser liquid 19 in the metering chamber 3 from the cleanser liquid 18 in the reservoir 1 and there is no liquid communication between the reservoir 1 and the metering chamber, because the inlet opening 9 of the metering chamber which is above the weir member 4 is thereby also above the levels of the liquids 18 and 19. The weir member 4 is shown to extend vertically from the lower wall 11 of the reservoir. It should be noted that the lower wall 11 only is the lower wall when the device is in the dispensing orientation.

In this orientation, the check valve 12 is now open, as depicted by the changed position of movable member 14. Hence, liquid communication is now possible between the metering chamber 3 and the spray head 6, via the intermediate chamber 15 and the spray head inlet opening 16. Thus, the mesh of the vibrating mesh spray actuator 7 is now contacted with the liquid. When the actuator 7 is actuated, i.e. the mesh is suitably vibrated by the electronic control circuit (not shown), the liquid will be atomised and expelled via the orifices 17 of the mesh. The orientation of the mesh ensures a predominantly downward projection of the expelled droplets of liquid.

After dispensing of the liquid, the lid is likely to stay in the closed position, but by accurate timing of the mesh actuation, no liquid will stay on the mesh. When a subsequent prospective user of the toilet opens the lid, he will thereby bring the spraying device back into the recharging orientation of Figure 1, preparing the device for a next actuation.

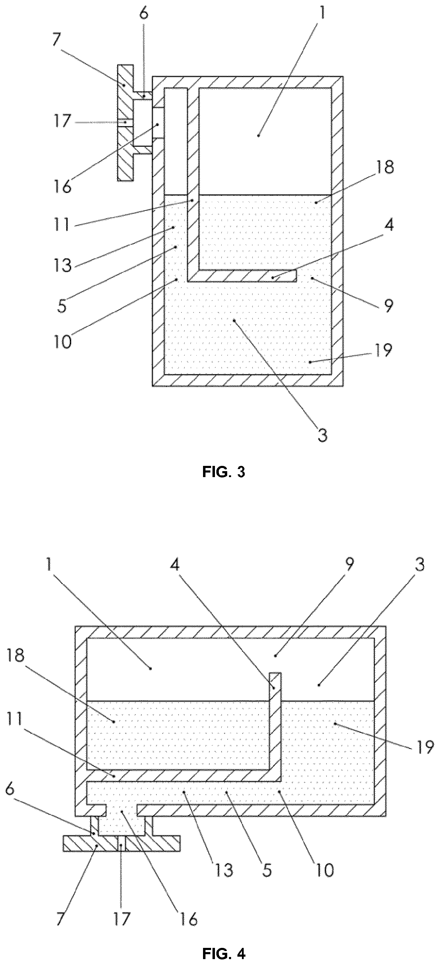

Figure 3 shows a cross section of a schematic representation of a second embodiment of the spraying device of the present invention. This is an embodiment according to the second alternative, wherein the conduit means comprises a channel. In Figure 3, the device is shown in the recharging orientation. The device comprises a reservoir 1 containing an amount of cleanser liquid. In the recharging orientation, the metering system 2 is located below the reservoir 1 and communicates with the reservoir 1 via the inlet opening 9. Therefore the metering chamber 3 is also filled with liquid.

The metering chamber 3 in turn communicates with the conduit means 5 via the outlet opening 10. In this particular embodiment, the conduit means 5 comprises a channel 13. It can be seen in Figure 3 that in the recharging orientation, the channel 13 extends in an upward direction from the metering chamber 3. In this case, the outlet opening 10 of the metering chamber also functions as the inlet opening of the channel 13.

The spray head 6 is located above and away from the metering chamber 3 and is connected to the channel 13 via the spray head inlet opening 16 which also serves as the channel outlet opening. The location of the spray head ensures that when the device is in the recharging orientation, the liquid contained in the device (whether in the reservoir 1, the metering chamber 2 or the channel 13) does not reach the spray head. Thus, prolonged contact between the liquid and the vibrating mesh spray actuator 7 is prevented as long as the device is in the recharging orientation.

When during typical use the device is rotated into the dispensing orientation, the device according to this embodiment as shown in Figure 4 functions in a similar way as the device of the embodiment of Figures 1 and 2. That is, the metering chamber 3 now is in fluid contact with the spray head 7 via the conduit means 5 (here formed by the channel 13). At same time, the fluid 18 contained in the reservoir 1 is no longer in communication with the fluid 19 in the metering chamber 3 by virtue of the weir member 4 which extends upwardly from the lower wall 11 of the reservoir 1. Again, the lower wall 11 refers to the wall that is the lower wall in the dispensing orientation. The actuation by the electronic control circuit and the repeatability of the operation of the device according to this embodiment are similar to that of the above embodiment of Figures 1 and 2 as will be understood by the person skilled in the art.

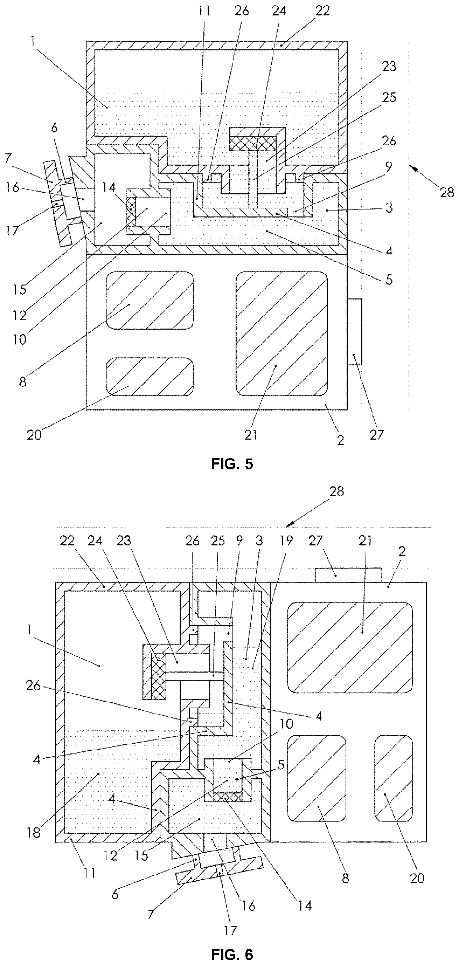

Figures 5 and 6 show another illustrative embodiment of the device according to the invention, in its recharging and dispensing orientation respectively. Like the embodiment of Figures 1 and 2, this embodiment also involves a conduit means 5 comprising a check valve 12. The embodiment of Figures 5 and 6 therefore functions by virtue of the same principles as that of Figures 1 and 2, but this embodiment demonstrates the benefits of a number of independent preferred features.

The embodiment of Figures 5 and 6 incorporates a housing 2 and a detachable cartridge 22 comprising the reservoir 1. The cartridge 22 also is an embodiment of the cartridge according to the second aspect of the invention. The housing 2 comprises the metering system (including the metering chamber 3), the conduit means 5 and the spray head 6. It also comprises an electronic control circuit 8, a tilt sensor 20 and a power source (e.g. a battery) 21. Electric connections (not shown) are established between the power source 21, the tilt sensor 20, the control circuit 8 and the piezoelectric element of the vibrating mesh spray actuator 7.

The housing 2 also is equipped with a connection means 27 suitable for fastening the device to a toilet lid 28.

The reservoir 1 again serves to store an amount of cleanser liquid. The cartridge 22 is detachable, so it can be replaced by a full cartridge, for example after all the cleanser in the original cartridge has been consumed. The cartridge 22 and the housing 2 are mutually compatible so that the cartridge can be connected to the housing such that the cleanser liquid can flow from the reservoir 1 into the metering chamber 3 when the device is in the recharging orientation. It is highly preferred that this liquid connection is leak-free. Therefore, as an example the outlet opening 23 of the cartridge 22 is equipped with a sealing plug 24, which blocks the opening 23 before the cartridge 1 is connected to the housing of the device. The receiving opening of the housing 2 is equipped with a pin 25 which pushes back the sealing plug 24 upon attachment of the cartridge 22 to the housing 2, thereby opening up the cartridge. When the cartridge is in place, the sealing ring 26 ensures a leak-free connection between the reservoir 1 and the metering system.

When the device is in the recharging orientation as depicted in Figure 5, the cleanser liquid from the reservoir 1 also fills the metering chamber 3. Like in the embodiment of Figure 1, the check valve 12 is closed by the closing member 14.

When the device is rotated into the dispensing orientation, the liquid 18 in the reservoir 1 is separated from the liquid 19 in the metering chamber 3. In this particular embodiment, the weir member 4 is constituted by a portion of the cartridge wall that extends upwardly between the lower wall 11 and the outlet opening 23 of the cartridge 22 in combination with the upward oriented wall of the metering chamber 3 below the inlet opening 9. In the dispensing orientation, the liquid 19 in the metering chamber can flow to the spray head 6 via the check valve 12, the intermediate chamber 15 and the spray head inlet opening 16 and be dispensed from by the vibrating mesh spray actuator 7 in the same manner as described for the embodiment of Figures 1 and 2.

Figure 6 shows that the mesh of the vibrating mesh spray actuator 7 is positioned under an angle with respect to the horizontal plane when in the dispensing orientation. Preferably, this angle is between 3° and 20°, more preferably between 5° and 15° as explained above. By virtue of this angle, any liquid that would undesirably remain in contact with the mesh after actuation of the vibrating mesh spray actuator 7 would be assisted in flowing to the side and off the mesh.

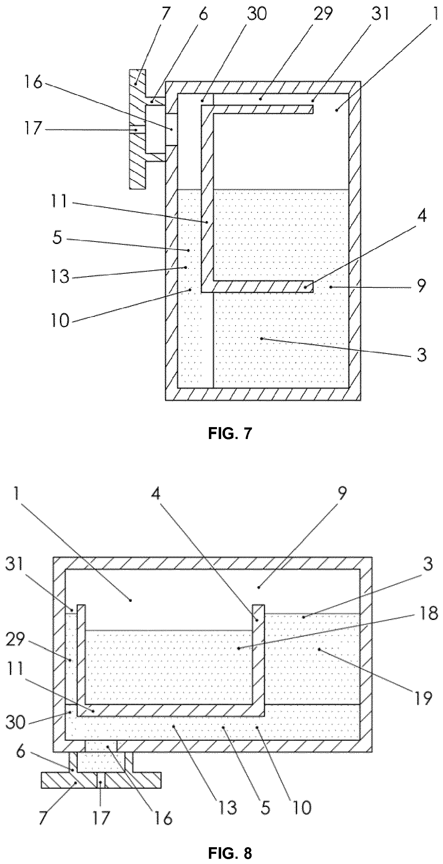

Figures 7 and 8 show yet another illustrative embodiment of the device according to the invention, in its recharging and dispensing orientation, respectively. Like the embodiment of Figures 3 and 4, this embodiment also involves a conduit means 5 comprising a channel 13. The embodiment of Figures 7 and 8 therefore functions by virtue of the same features and principles as that of Figures 3 and 4. In addition to the features presented in the embodiment of Figures 3 and 4, the present embodiment also comprises an air passage 29, having a passage inlet opening 30 and a passage outlet opening 31. The passage inlet opening 30 opens into the channel 13 close to the spray head inlet opening 16, and the passage outlet opening 31 opens into the reservoir 1. Figure 7 shows how the placement of the air passage 29 close to the spray head inlet opening 16 ensures that it is located above the fluid level in the reservoir such that the liquid in the reservoir cannot reach the spray head via the air passage when the device is in the recharging orientation. Figure 8 shows that when the device is in the dispensing orientation, the air passage 29 extends upward from the channel 13, and thus the vent outlet opening 31 opens into the reservoir 1 above and away from the lowest point of the reservoir. This configuration ensures that the liquid 18 in the reservoir 1 is separated from the liquid 19 in the metering chamber 3 and in the channel 13 despite the presence of the air passage 29. When the vibrating mesh spray actuator 7 is activated by the electronic control circuit as described above, the fluid in the spray head 6 will be atomised and expelled, whilst at the same time any air entering the spray head 6 (typically in the form of small air bubbles) can escape to the reservoir 1 via the air channel 30. Advantageously, the configuration of this embodiment makes any additional air vents, in particular air vents allowing air flow between the reservoir 1 or the metering chamber 3 and the outside of the device unnecessary.

If the device comprises an air passage 29 as described, it is preferred that the device is configured such that when it is in the dispensing orientation, the lowest point of the outlet opening 31 of the air vent 29 is lower than the lowest point of the inlet opening 9 of the metering chamber 3. This configuration provides the additional advantage that upon rotation of the spraying device from the recharging to the dispensing orientation, the metering system would always be filled with the same amount of liquid regardless of amount left in the reservoir, because during rotation the air vent and the metering chamber communicate. Thus, during rotation the weir starts - at a certain angle of rotation - to separate the liquid in the reservoir from that in the metering chamber, while at the same time the channel 13 is increasingly being filled. If the rotation is carried out somewhat fast the liquid in the metering chamber will be at a slightly higher level than the height of the outlet 31 by the time the device is in the dispensing orientation. However, some liquid will then flow via the channel 13 and the air vent 29 until the fluid in the metering chamber is at the same level as the outlet opening 31.

## Claims

1. A spraying device for spraying an enclosure with a liquid cleanser, wherein the device comprises a reservoir **(1)** for containing the liquid cleanser or is adapted for receiving a detachable cartridge **(22)** comprising a reservoir **(1)** for containing the liquid cleanser,
• and wherein the device further comprises
∘ a metering system comprising a metering chamber **(3)**, a weir member **(4)**, and a conduit means **(5)**,
∘ a spray head **(6)** containing a vibrating mesh spray actuator **(7)**, and
∘ an electronic control circuit **(8)** for controlling the spray actuator **(7)**;
• whereby
∘ the metering chamber **(3)** comprises an inlet opening **(9)** and an outlet opening **(10)**, and whereby the weir member **(4)** is located between the reservoir **(1)** and the metering chamber **(3)** and
∘ the device is rotatable between a first recharging orientation and a second dispensing orientation;
• and whereby in the recharging orientation,
∘ the metering chamber **(3)** is located below the reservoir **(1)** and is in fluid communication therewith via the inlet opening **(9)**;
• and whereby in the dispensing orientation:
∘ the weir member **(4)** extends upward from the lower wall **(11)** of the reservoir and the metering inlet opening **(9)** is located above the weir member **(4),**
∘ the metering chamber **(3)** is in fluid communication with the vibrating mesh spray actuator **(7)** via the metering outlet opening **(10)** and the conduit means **(5)**, and
∘ the spray head **(6)** is located below the metering chamber and is adapted for spraying in downward direction;
• and whereby the conduit means **(5)** comprises an element selected from a check valve **(12)** and a channel **(13)**, whereby
∘ if the element is said check valve **(12)**, the check valve **(12)** is closed when the device is in the recharging position and opened when the device is in the dispensing orientation,
∘ and if the element is said channel **(13)**, the channel communicates with the metering chamber via a channel inlet opening and communicates with the spray head **(6)** via a channel outlet opening and whereby, when the device is in the recharging orientation, the channel (13) extends in an upward direction from the metering chamber (3) and the spray head **(6)** is located above and away from the metering chamber **(3)**.

2. A spraying device according to claim 1 wherein the conduit means (5) is a channel (13) as specified in claim 1.

3. A spraying device according to claim 2, wherein the volume of the channel (13) is smaller than the volume of liquid that is dispensable by the vibrating mesh spray actuator **(7)** within a time that is smaller than or equal to the maximum safe dry-run time of said vibrating mesh spray actuator **(7).**

4. A spraying device according to claim 2 or 3, wherein the device also comprises an air passage (29) comprising a passage inlet opening (30) and a passage outlet opening (31), whereby
• the passage inlet opening (30) opens into the channel (13) close to the channel outlet opening, and
• whereby when the device is in the dispensing orientation
∘ the air passage (29) extends upward from the channel (13), and
∘ the passage outlet opening (31) opens into the reservoir (1) above and away from the lowest point of the reservoir.

5. A spraying device according to claim 1 wherein the conduit means (5) is a check valve (12) as specified in claim 1.

6. A spraying device according to claim 4 wherein the check valve (5) is a float valve.

7. A spraying device according to any one of the preceding claims, comprising a detachable cartridge (22), whereby the reservoir (1) is comprised in the cartridge (22).

8. A spraying device according to any one of the preceding claims, wherein the volume of the metering chamber (3) is between 0.1 and 5 millilitre, more preferably between 0.2 and 2 millilitre, even more preferably between 0.3 and 1 millilitre, and still more preferably between 0.4 and 0.6 millilitre.

9. A spraying device according to any one of the preceding claims, wherein the electronic control circuit (8) is equipped with a tilt sensor (20).

10. A spraying device according to any one of the preceding claims, wherein the principal plane of the mesh of the vibrating mesh spray actuator (7) is at an angle of between 5 and 15 degrees with respect to the horizontal plane when the device is in the dispensing orientation.

11. A spraying device for spraying an enclosure with a liquid cleanser according to any one of the preceding claims, wherein the enclosure is a toilet bowl.

12. A spraying device according to any one of the preceding claims, wherein the device is attachable to a rotatable surface (28), wherein the surface (28) preferably is a toilet lid.

13. A method for spraying an enclosure comprising a rotatable surface with a liquid cleanser, comprising the steps of
a. providing a spraying device according to any one of the preceding claims, whereby the reservoir is charged with cleansing liquid;
b. attaching the spraying device to the rotatable surface;
c. bringing the spraying device in its recharging orientation, thereby filling the metering chamber with a dose of the cleansing liquid;
d. bringing the spraying device in its dispensing orientation;
e. dispensing the dose of cleansing liquid via the vibrating membrane spray actuator; and
f. optionally repeating the steps c to e.

14. Use of a spraying device according to any one of claims 1 to 12 for repeatedly spraying a dose of cleansing liquid into an enclosure, preferably into a toilet bowl.

## Patentansprüche

1. Sprühvorrichtung zum Besprühen eines Gehäuses mit einem flüssigen Reinigungsmittel, wobei die Vorrichtung einen Behälter (1) zum Enthalten des flüssigen Reinigungsmittels umfasst oder ausgelegt ist, eine abnehmbare Kartusche (22) aufzunehmen, die einen Behälter (1) zum Enthalten des flüssigen Reinigungsmittels umfasst,
• und wobei die Vorrichtung ferner Folgendes umfasst:
∘ ein Dosiersystem, das eine Dosierkammer (3), ein Stauelement (4) und Leitungsmittel (5) umfasst,
∘ einen Sprühkopf (6), der einen Sprühaktuator (7) mit vibrierendem Maschennetz enthält, und
∘ eine elektronische Steuerschaltung (8) zum Steuern des Sprühaktuators (7);
• wobei
∘ die Dosierkammer (3) eine Einlassöffnung (9) und eine Auslassöffnung (10) umfasst und wobei das Stauelement (4) zwischen dem Behälter (1) und der Dosierkammer (3) angeordnet ist, und
∘ die Vorrichtung zwischen einer ersten Ausrichtung zum Wiederbefüllen und einer zweiten Ausrichtung zum Ausgeben gedreht werden kann;
• und wobei in der Ausrichtung zum Wiederbefüllen
∘ die Dosierkammer (3) unter dem Behälter (1) angeordnet ist und damit über die Einlassöffnung (9) in Fluidkommunikation ist;
• und wobei in der Ausrichtung zum Ausgeben:
∘ sich das Stauelement (4) von der unteren Wand (11) des Behälters nach oben erstreckt und sich die Dosiereinlassöffnung (9) über dem Stauelement (4) befindet,
∘ die Dosierkammer (3) mit dem Sprühaktuator (7) mit vibrierendem Maschennetz über die Dosierauslassöffnung (10) und die Leitungsmittel (5) in Fluidkommunikation ist, und
∘ der Sprühkopf (6) unter der Dosierkammer angeordnet ist und ausgelegt ist, in einer Abwärtsrichtung zu sprühen;
• und wobei die Leitungsmittel (5) ein Element umfassen, das aus einem Prüfventil (12) und einem Kanal (13) ausgewählt wird, wobei
∘ dann, wenn das Element das Prüfventil (12) ist, das Prüfventil (12) geschlossen ist, wenn die Vorrichtung in der Position zum Wiederbefüllen ist und geöffnet ist, wenn die Vorrichtung in der Ausrichtung zum Ausgeben ist,
∘ und dann, wenn das Element der Kanal (13) ist, der Kanal mit der Dosierkammer über eine Kanaleinlassöffnung kommuniziert und mit dem Sprühkopf (6) über eine Kanalauslassöffnung kommuniziert und wobei dann, wenn die Vorrichtung in der Ausrichtung zum Wiederbefüllen ist, sich der Kanal (13) in einer Aufwärtsrichtung von der Dosierkammer (3) erstreckt und der Sprühkopf (6) über der Dosierkammer (3) und entfernt davon angeordnet ist.

2. Sprühvorrichtung nach Anspruch 1, wobei die Leitungsmittel (5) ein Kanal 13) nach Anspruch 1 sind.

3. Sprühvorrichtung nach Anspruch 2, wobei das Volumen des Kanals (13) kleiner als das Volumen der Flüssigkeit ist, die durch den Sprühaktuator (7) mit vibrierendem Maschennetz innerhalb einer Zeit ausgegeben werden kann, die kürzer oder gleich der maximalen sicheren Trockenlaufzeit des Sprühaktuators 7) mit vibrierendem Maschennetz ist.

4. Sprühvorrichtung nach Anspruch 2 oder 3, wobei die Vorrichtung außerdem einen Luftdurchgang (29) umfasst, der eine Durchgangseinlassöffnung (30) und eine Durchgangauslassöffnung (31) umfasst, wobei
• sich die Durchgangseinlassöffnung (30) in den Kanal (13) direkt an der Kanalauslassöffnung öffnet, und
• wobei dann, wenn sich die Vorrichtung in der Ausrichtung zum Ausgeben befindet,
∘ der Luftdurchgang (29) sich von dem Kanal (13) nach oben erstreckt, und
∘ die Durchgangsauslassöffnung (31) sich in den Behälter (1) über dem untersten Punkt des Behälters und entfernt davon öffnet.

5. Sprühvorrichtung nach Anspruch 1, wobei die Leitungsmittel (5) ein Prüfventil (12) nach Anspruch 1 sind.

6. Sprühvorrichtung nach Anspruch 4, wobei das Prüfventil (5) ein Schwimmerventil ist.

7. Sprühvorrichtung nach einem der vorhergehenden Ansprüche, die eine abnehmbare Kartusche (22) umfasst, wobei der Behälter (1) in der Kartusche (22) enthalten ist.

8. Sprühvorrichtung nach einem der vorhergehenden Ansprüche, wobei das Volumen der Dosierkammer (3) zwischen 0,1 und 5 Milliliter, vorzugsweise zwischen 0,2 und 2 Milliliter, stärker bevorzugt zwischen 0,3 und 1 Milliliter und am stärksten bevorzugt zwischen 0,4 und 0,6 Milliliter liegt.

9. Sprühvorrichtung nach einem der vorhergehenden Ansprüche, wobei die elektronische Steuerschaltung (8) mit einem Kippsensor (20) ausgestattet ist.

10. Sprühvorrichtung nach einem der vorhergehenden Ansprüche, wobei die Hauptebene des Netzes des Sprühaktuators (7) mit vibrierendem Maschennetz in einem Winkel im Bereich von 5 bis 15 Grad in Bezug auf die horizontale Ebene liegt, wenn die Vorrichtung in der Ausrichtung zum Ausgeben ist.

11. Sprühvorrichtung zum Sprühen auf ein Gehäuse mit einem flüssigen Reinigungsmittel nach einem der vorhergehenden Ansprüche, wobei das Gehäuse eine Toilettenschüssel ist.

12. Sprühvorrichtung nach einem der vorhergehenden Ansprüche, wobei die Vorrichtung an einer drehbaren Oberfläche (28) befestigt werden kann, wobei die Oberfläche (28) vorzugsweise ein Toilettendeckel ist.

13. Verfahren zum Sprühen auf ein Gehäuse, das eine drehbare Oberfläche umfasst, mit einem flüssigen Reinigungsmittel, wobei das Verfahren die folgenden Schritte umfasst:
a. Bereitstellen einer Sprühvorrichtung nach einem der vorhergehenden Ansprüche, wobei der Behälter mit der Reinigungsflüssigkeit befüllt ist;
b. Befestigen der Sprühvorrichtung an der drehbaren Oberfläche;
c. Bringen der Sprühvorrichtung in ihre Ausrichtung zum Wiederbefüllen, wobei die Dosierkammer mit einer Dosis der Reinigungsflüssigkeit gefüllt wird;
d. Bringen der Sprühvorrichtung in ihre Ausrichtung zum Ausgeben;
e. Ausgeben der Dosis der Reinigungsflüssigkeit über den Sprühaktuator mit vibrierender Membran; und
f. optional Wiederholen der Schritte c bis e.

14. Verwendung einer Sprühvorrichtung nach einem der Ansprüche 1 bis 12 zum wiederholten Sprühen einer Dosis einer Reinigungsflüssigkeit in ein Gehäuse, vorzugsweise in eine Toilettenschüssel.

## Revendications

1. Dispositif de pulvérisation pour pulvériser une enceinte avec un nettoyant liquide, dans lequel le dispositif comprend un réservoir (1) pour contenir le nettoyant liquide ou est adapté pour recevoir une cartouche amovible (22) comprenant un réservoir (1) pour contenir le nettoyant liquide,
• et dans lequel le dispositif comprend de plus
∘ un système de dosage comprenant une chambre de dosage (3), un élément de déversoir (4), et un moyen de conduit (5),
∘ une tête de pulvérisation (6) contenant un actionneur de pulvérisation à maille vibrante (7), et
∘ un circuit de commande électronique (8) pour commander l'actionneur de pulvérisation (7) ;
• sur quoi
∘ la chambre de dosage (3) comprend une ouverture d'entrée (9) et une ouverture de sortie (10), et sur quoi l'élément de déversoir (4) est disposé entre le réservoir (1) et la chambre de dosage (3) et
∘ le dispositif peut tourner entre une première orientation de recharge et une seconde orientation de distribution ;
• et sur quoi dans l'orientation de recharge,
∘ la chambre de dosage (3) est disposée sous le réservoir (1) et est en communication fluide avec celle-ci via l'ouverture d'entrée (9) ;
• et sur quoi dans l'orientation de distribution :
∘ l'élément de déversoir (4) s'étend vers le haut à partir de la paroi inférieure (11) du réservoir et l'ouverture d'entrée de dosage (9) est disposée au-dessus de l'élément de déversoir (4),
∘ la chambre de dosage (3) est en communication fluide avec l'actionneur de pulvérisation à maille vibrante (7) via l'ouverture de sortie de dosage (10) et le moyen de conduit (5), et
∘ la tête de pulvérisation (6) est disposée sous la chambre de dosage et est adaptée pour pulvériser dans une direction vers le bas ;
• et sur quoi le moyen de conduit (5) comprend un élément choisi parmi un clapet anti-retour (12) et un canal (13), sur quoi
∘ si l'élément est ledit clapet anti-retour (12), le clapet anti-retour (12) est fermé lorsque le dispositif est dans la position de recharge et ouvert lorsque le dispositif est dans l'orientation de distribution,
∘ et si l'élément est ledit canal (13), le canal communique avec la chambre de dosage via une ouverture d'entrée de canal et communique avec la tête de pulvérisation (6) via une ouverture de sortie de canal et sur quoi, lorsque le dispositif est dans l'orientation de recharge, le canal (13) s'étend dans une direction vers le haut à partir de la chambre de dosage (3) et la tête de pulvérisation (6) est disposée au-dessus et à distance de la chambre de dosage (3).

2. Dispositif de pulvérisation selon la revendication 1 dans lequel le moyen de conduit (5) est un canal (13) selon la revendication 1.

3. Dispositif de pulvérisation selon la revendication 2, dans lequel le volume du canal (13) est inférieur au volume de liquide qui peut être distribué par l'actionneur de pulvérisation à maille vibrante (7) sur une durée qui est inférieure ou égale à la durée de fonctionnement à sec de sécurité maximale dudit actionneur de pulvérisation à maille vibrante (7).

4. Dispositif de pulvérisation selon la revendication 2 ou 3, dans lequel le dispositif comprend également un passage d'air (29) comprenant une ouverture d'entrée de passage (30) et une ouverture de sortie de passage (31), sur quoi
• l'ouverture d'entrée de passage (30) s'ouvre dans le canal (13) à proximité de l'ouverture de sortie de canal, et
• sur quoi lorsque le dispositif est dans l'orientation de distribution
∘ le passage d'air (29) s'étend vers le haut à partir du canal (13), et
∘ l'ouverture de sortie de passage (31) s'ouvre dans le réservoir (1) au-dessus et à distance du point le plus bas du réservoir.

5. Dispositif de pulvérisation selon la revendication 1, dans lequel le moyen de conduit (5) est un clapet anti-retour (12) selon la revendication 1.

6. Dispositif de pulvérisation selon la revendication 4, dans lequel le clapet anti-retour (5) est un clapet à flotteur.

7. Dispositif de pulvérisation selon l'une quelconque des revendications précédentes, comprenant une cartouche amovible (22), sur quoi le réservoir (1) est compris dans la cartouche (22).

8. Dispositif de pulvérisation selon l'une quelconque des revendications précédentes, dans lequel le volume de la chambre de dosage (3) est de 0,1 à 5 millilitre, encore mieux de 0,2 à 2 millilitre, bien mieux encore de 0,3 à 1 millilitre, et particulièrement de préférence de 0,4 à 0,6 millilitre.

9. Dispositif de pulvérisation selon l'une quelconque des revendications précédentes, dans lequel le circuit de commande électronique (8) est équipé d'un capteur d'inclinaison (20).

10. Dispositif de pulvérisation selon l'une quelconque des revendications précédentes, dans lequel le plan principal de la maille de l'actionneur de pulvérisation à maille vibrante (7) se trouve à un angle de 5 à 15 degrés par rapport au plan horizontal lorsque le dispositif se trouve dans l'orientation de distribution.

11. Dispositif de pulvérisation pour pulvériser une enceinte avec un nettoyant liquide selon l'une quelconque des revendications précédentes, dans lequel l'enceinte est une cuvette de toilettes.

12. Dispositif de pulvérisation selon l'une quelconque des revendications précédentes, dans lequel le dispositif peut être fixé à une surface pouvant tourner (28), dans lequel la surface (28) est de préférence un couvercle de toilettes.

13. Procédé de pulvérisation d'une enceinte comprenant une surface pouvant tourner avec un nettoyant liquide, comprenant les étapes de
a. fourniture d'un dispositif de pulvérisation selon l'une quelconque des revendications précédentes, sur quoi le réservoir est chargé avec un liquide nettoyant ;
b. fixation du dispositif de pulvérisation à la surface pouvant tourner ;
c. mise du dispositif de pulvérisation dans son orientation de recharge, remplissant par-là la chambre de dosage avec une dose du liquide nettoyant ;
d. mise du dispositif de pulvérisation dans son orientation de distribution ;
e. distribution de la dose de liquide nettoyant via l'actionneur de pulvérisation à membrane vibrante ; et
f. éventuellement répétition des étapes c à e.

14. Utilisation d'un dispositif de pulvérisation selon l'une quelconque des revendications 1 à 12 pour pulvériser de manière répétitive une dose de liquide nettoyant dans une enceinte, de préférence dans une cuvette de toilettes.
